# EUROPEAN PATENT SPECIFICATION

(11) **EP 2 696 730 B1**
(45) Date of publication and mention of the grant of the patent: **15.04.2015**
(21) Application number: 11721518.6
(22) Date of filing: 24.05.2011
(51) Int. Cl.: A47J 31/06

(54) **INFUSION ASSEMBLY OF A MACHINE FOR THE PRODUCTION OF A BEVERAGE AND CONTROL METHOD FOR SAID INFUSION ASSEMBLY**
INFUSIONSANORDNUNG EINER MASCHINE ZUR HERSTELLUNG EINES GETRÄNKS UND STEUERUNGSVERFAHREN FÜR BESAGTE INFUSIONSANORDNUNG
ENSEMBLE D'INFUSION D'UNE MACHINE PERMETTANT DE PRODUIRE UNE BOISSON ET PROCÉDÉ DE COMMANDE DUDIT ENSEMBLE D'INFUSION

(30) Priority: 25.05.2010 IT MI20100940
(43) Date of publication of application: 19.02.2014
(73) Proprietor: Brasilia S.p.A., 27050 RETORBIDO (PAVIA) (IT)
(72) Inventor: ROSSI, Giampiero, I-27055 Rivanazzano (Pavia) (IT); OSTUNI, Alessandro, I-50053 Empoli (Firenze) (IT)
(74) Representative: Tansini, Elio Fabrizio
(86) International application number: PCT/EP2011/058498
(87) International publication number: WO 2011/147844

(56) References cited:
- WO-A1-2006/066622
- WO-A1-2006/066625
- WO-A2-2009/006374
- DE-U1-202009 002 905
- FR-A1- 2 885 288

## Description

### DESCRIPTION

The present invention relates to an infusion assembly of a machine for the production of a beverage, in particular, but not necessarily, coffee, and a control method for the delivery of the infusion assembly.

More precisely, the invention relates to an infusion assembly of a machine for the production of a beverage, of the type comprising an infusion chamber able to house within it a disposable capsule having a bottom wall protected by a pierceable membrane for the delivery.

The use of capsules protected on the bottom wall by a membrane is fairly well established for reasons of hygiene and practicality. The document DE 202009002905 U discloses an infusion assembly for housing a disposable capsule.

One of the main factors influencing the result of delivery is defined by the correspondence of the type of capsule used with the infusion assembly, since it is obvious that delivery with an unsuitable capsule negatively impacts the quality of delivery, which results in a product in the cup that is not very palatable or in any case far from the desired specifications.

The technical task the present invention has set itself is therefore to realize an infusion assembly of a machine for the production of a beverage, of the type comprising an infusion chamber able to house within it a disposable capsule having a bottom wall protected by a pierceable membrane for the delivery, and a method for the control thereof, which allow the aforementioned technical drawbacks of the prior art to be overcome.

Within the scope of this technical task, one object of the invention is to realize an infusion assembly of a machine for the production of a beverage, of the type comprising an infusion chamber able to house within it a disposable capsule having a bottom wall protected by a pierceable membrane for the delivery, and a method for the control thereof, which enable correct delivery only if the delivery conditions are the optimal ones defined by the exact correspondence of the type of capsule used to the infusion assembly.

The technical task, as well as these and other objects, according to the present invention are achieved by realizing an infusion assembly of a machine for the production of a beverage, of the type comprising an infusion chamber able to house within it a disposable capsule having a bottom wall protected by a pierceable membrane for the delivery, characterized in that the bottom wall of said infusion chamber upon which said membrane is able to rest has hydraulic sealing means against said membrane, so configured that they circumscribe at least a delivery way of the beverage present on said bottom wall of said infusion chamber and the region of said membrane susceptible of being perforated, said infusion chamber having also discharge means of the beverage positioned externally relative to the region of said bottom wall of said infusion chamber circumscribed by said sealing means.

Preferably, said delivery way has means for its own closing sensible for the opening at an increase of the pressure of said liquid present in said at least one delivery way.

Preferably, said closing means comprise a mushroom valve.

Preferably, said delivery way opens at the central region of said bottom wall, and said discharge means comprise at least a discharge way which opens along the perimeter of said bottom wall of said infusion chamber.

Preferably, said sealing means comprise a rubber gasket.

Preferably, said bottom wall of said infusion chamber has a bead for the resting of said bottom wall of said capsule, said rest bead circumscribing said sealing means. Preferably, said bead is configured in order to match with the peripheral projection of the bottom wall of said infusion chamber along which said membrane is peripherally fixed.

The present invention also relates to a coffee machine that comprises such an infusion assembly.

The present invention also relates, finally, to a method for controlling the delivery of an infusion assembly of a machine for the production of a beverage, of the type comprising an infusion chamber able to house within it a disposable capsule having a bottom wall protected by a pierceable membrane for the delivery, characterized in that it creates through said membrane, in cooperation with the bottom wall of said infusion chamber, an hydraulic insulation between at least one discharge way and said at least a delivery way, and in order to subordinate the opening of said at least a delivery way to an increase of the pressure of said liquid in said at least a delivery way to direct preferentially said liquid towards said a least one discharge way when in said infusion chamber a capsule is charged, of the type not having said membrane.

Further characteristics and advantages of the invention will be more apparent from the description of a preferred, but not exclusive embodiment of the infusion assembly according to the invention, illustrated by way of non-restrictive example in the appended drawings, in which:

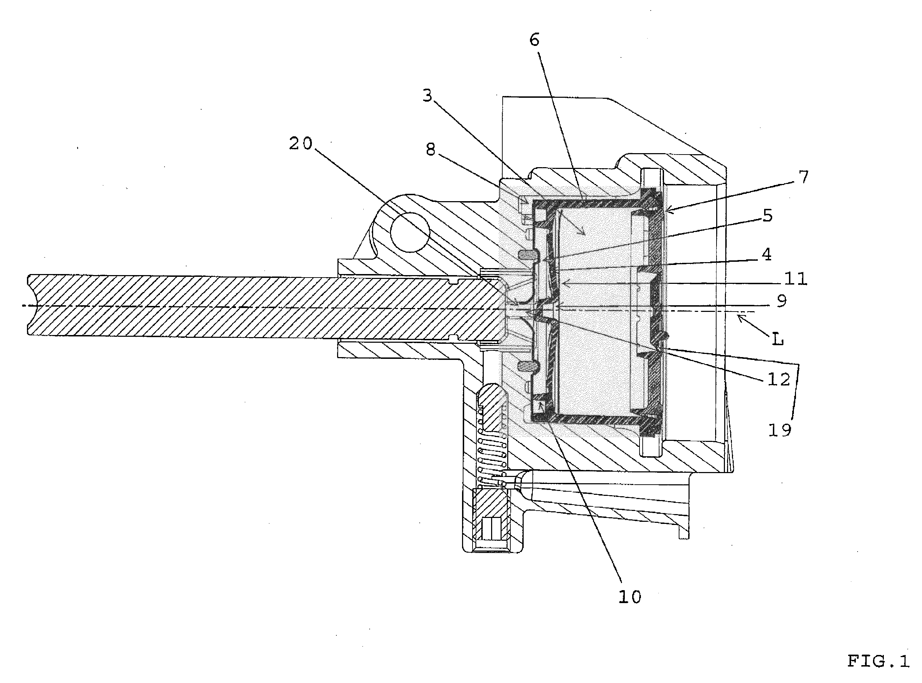

figure 1 shows a side elevation view of the infusion assembly sectioned along a diametral plane, in which a capsule of the correct type is inserted in the infusion chamber; and

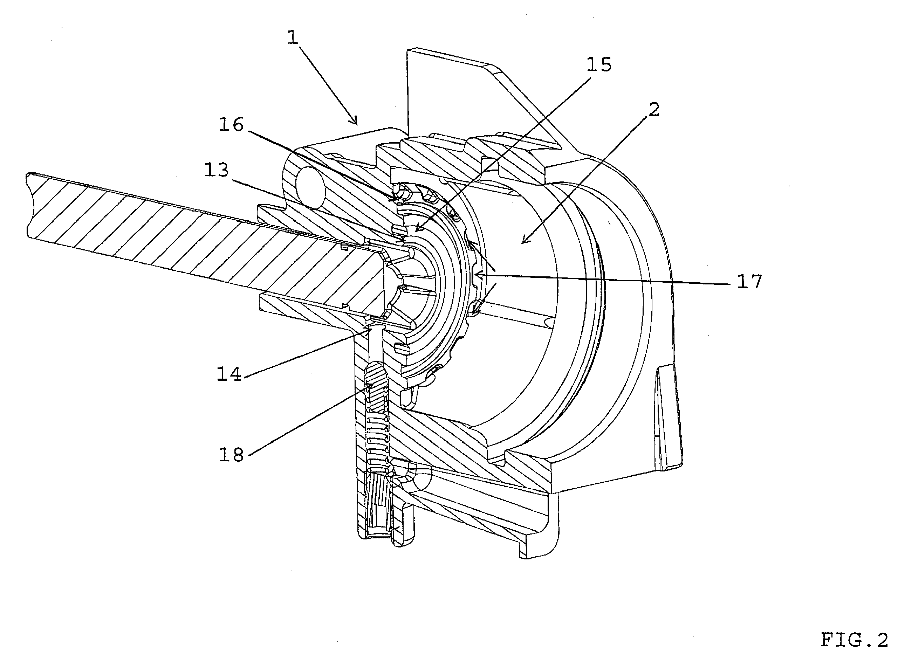

figure 2 shows a perspective view of the infusion assembly of figure 1, again sectioned along a diametral plane.

With reference to the aforesaid figures, there is shown an infusion assembly of a machine for the production of a beverage, for example of coffee, indicated overall with the reference number 1.

The machine for the production of the beverage includes in general a pump for supplying water to the infusion assembly and a boiler for heating the infusion water.

The infusion assembly 1 comprises an infusion chamber 2 able to house within it a disposable capsule 3 containing the aromatic essence with which the infusion must be prepared.

The infusion assembly 1 includes, in a known way, an infusion piston (not shown) movable between a closing position and an opening position of the infusion chamber 2.

Naturally, the opening and closing of the infusion chamber 2 can also be brought about by the movement of the infusion chamber 2 or more in general by a relative movement between the infusion chamber 2 and the closing piston.

The capsule 3 which may be correctly used with the infusion assembly 1 is of the type comprising a bottom wall 4 protected by a pierceable membrane 5 for the delivery.

In the case considered the capsule 3 comprises a main body formed by a cylindrical lateral delimiting wall 6 and by the bottom wall 4, which closes one base of the cylindrical lateral delimiting wall 6, whose other base is closed by a cover 7 having a facilitated breaking line 19 for access of the infusion water into the capsule 3.

The bottom wall 4 is in a position set slightly back in the direction of the axis L of the capsule 3 relative to the base edge 8 of the cylindrical lateral delimiting wall 6. The inside of the bottom wall 4 is entirely covered by a filter 11, while the outside of the bottom wall 4 has a central axially hollow perforator 9 and a peripheral projection 10 that extends along a circumference having its centre in the central point of positioning of the perforator 9.

The tip of the perforator 9, in the undeformed configuration that the capsule 3 has prior to delivery, is set slightly back in an axial direction L relative to the end of the projection 10.

The membrane 5 is peripherally sealed along the end of the projection 10 and in the undeformed configuration of the capsule 3 it delimits with its bottom wall 4 and the projection 10 a chamber 12 within which the perforator 9 is confined.

The perforator 9 is activatable in an axial direction L so as to perforate the central region of the membrane 5 when the hydraulic pressure present inside the capsule 3 deforms the bottom wall 4 of the capsule 3, changing the convexity thereof, initially turned toward the inside of the capsule 3.

The bottom wall 13 of the infusion chamber 2, upon which the membrane 5 is able to rest, has hydraulic sealing means against the membrane 5, so configured that they circumscribe both a central region of the bottom wall 13 of the infusion chamber 2 comprising a delivery way 14 for the beverage, and a central region of the membrane 5 susceptible of being perforated.

The sealing means comprise a rubber gasket 15 which projects from the bottom wall 13 of the infusion chamber 2.

The bottom wall 13 of the infusion chamber 2 also has a bead 16 circumscribing the sealing means and suitable for the resting of the bottom wall 4 of the capsule 3.

The bead 16 has a configuration such as to match with the peripheral projection 10 of the bottom wall 4 of the capsule 3 along which the membrane 5 is peripherally fixed.

In particular, the gasket 15 and the bead 16 extend along circumferences centred in the centre of the bottom wall 13 of the infusion chamber 2 from which the delivery way 14 originates.

The infusion chamber 2 also has means for discharging the beverage, positioned externally relative to the region of the bottom wall 13 of the infusion chamber 2 circumscribed by the gasket 15.

The discharge means comprise a plurality of discharge ways 17 which open along the perimeter of the bottom wall 13 of the infusion chamber 2.

The discharge ways 17 converge into a single manifold (not shown) able to discharge into a tray (also not shown).

Advantageously, the delivery way 14 has means for its own closing sensible for the opening at an increase of the pressure of said liquid present in the delivery way 14 itself.

The closing means comprise a mushroom valve 18 designed to open the delivery way 14 only when the pressure of the liquid generates on the shutter valve 18 a thrust force equal to the elastic force generated in the opposite direction by the spring which presses the shutter of the valve 18.

The method for controlling the delivery of the infusion assembly is based on the fact of creating through the membrane 5, in cooperation with the bottom wall 13 of the infusion chamber 2, an hydraulic insulation between the discharge ways 17 and the delivery way 14, and of subordinating the opening of the delivery way 14 to an increase of the pressure of the liquid present in the delivery way 14 so as to direct the liquid preferentially towards the discharge ways 17 when a capsule of the type not having the membrane 5 is inserted into the infusion chamber 2.

The functioning of the infusion assembly according to the invention is apparent from what has been described and illustrated and, in particular, is substantially the following.

Let us assume initially to insert into the infusion chamber the capsule 3, of the correct type having the membrane 5, which in particular is in the form of a deformable film, but it could be a thermoformed element not necessarily deformable.

When the capsule 3 is inserted into the infusion chamber 2, the membrane 5 rests upon the gasket 15.

The seal of the gasket 15 against the membrane 5 is assured by the pressure that is generated inside the capsule 3, and/or by the squeezing of the capsule 3 due to the closing of the infusion chamber 2 and/or the pressure acting upon the cover 7 of the capsule 3.

The infusion water enters the capsule 3 upon the breaking of the line 19 of the cover 7 and the infusion obtained comes out of capsule 3 through the opening 20 created by the perforator 9.

The delivery pressure present inside the capsule 3 on the side of the membrane 5 causes the latter to remain adherent to the gasket 15, which therefore cannot be passed over by the infusion.

The infusion is thus obliged to flow through the central delivery way 14, which opens when the pressure of the infusion generates a force suitable for changing over the valve 18, normally closed.

If on the other hand there is introduced into the infusion chamber a capsule of the type that is not correct, because it lacks the membrane 5, the delivery way 14 and the discharge ways 17 will be in fluid communication.

At this point, given that the discharge ways 17 are free whereas the delivery way 14 has the normally closed valve 18, there will arise a preferential flow of liquid towards the discharge ways 17.

The use of a capsule that is not of the correct type will therefore not produce delivery into the cup but rather a discharge of liquid into the drip tray provided.

It has in practice been ascertained that the infusion assembly according to the invention is particularly advantageous because of the fact of delivering correctly only when the capsule used is of a suitable type such as to obtain only beverages meeting the desired specifications from a sensory point of view.

The infusion assembly thus conceived is susceptible of numerous modifications and variants, all falling within the scope of the inventive concept; moreover, all the details may be replaced with technically equivalent elements.

In practice, the materials used, as well as the dimensions, can be any whatsoever according to need and the state of the art.

## Claims

1. An infusion assembly (1) of a machine for the production of a beverage, of the type comprising an infusion chamber (2) able to house within it a disposable capsule (3) having a bottom wall (4) protected by a pierceable membrane (5) for the delivery, **characterized in that** the bottom wall (13) of said infusion chamber (2) upon which said membrane (5) is able to rest has hydraulic sealing means against said membrane (5), so configured that they circumscribe a region of said bottom wall (13) of said infusion chamber (2) comprising at least a delivery way (14) of the beverage and a region of said membrane (5) susceptible of being perforated, said infusion chamber (2) having also discharge means of the beverage positioned externally with respect to said region of the bottom wall (13) of said infusion chamber (2) circumscribed by said sealing means.

2. The infusion assembly (1) of a machine for the production of a beverage according to claim 1, **characterized in that** said delivery way (14) has means for its own closing sensible for the opening at an increase of the pressure of said liquid present in said at least one delivery way (14).

3. The infusion assembly (1) of a machine for the production of a beverage according to the preceding claim, **characterized in that** said closing means comprise a mushroom valve (18).

4. The infusion assembly (1) of a machine for the production of a beverage according to any of preceding claims, **characterized in that** said delivery way (14) opens at the central region of said bottom wall (13) of said infusion chamber (2), and that said discharge means comprise at least a discharge way (17) which opens along the perimeter of said bottom wall (13) of said infusion chamber (2).

5. The infusion assembly (1) of a machine for the production of a beverage according to any of preceding claims, **characterized in that** said sealing means comprise a rubber gasket (15).

6. The infusion assembly (1) of a machine for the production of a beverage according to any of preceding claims, **characterized in that** said bottom wall (13) of said infusion chamber (2) has a bead (16) for the resting of said bottom wall (4) of said capsule (3), said rest bead (16) circumscribing said sealing means.

7. The infusion assembly (1) of a machine for the production of a beverage according to the preceding claims, **characterized in that** said bead (16) is configured in order to match with a peripheral projection (10) of the bottom wall (4) of said capsule (3) along which said membrane (5) is peripherally fixed.

8. A coffee machine, **characterized in that** it comprises an infusion assembly according to one or more preceding claims.

9. A control method for the delivery of an infusion assembly (1) of a machine for the production of a beverage, of the type comprising an infusion chamber (2) able to house within it a disposable capsule (3) having a bottom wall (4) protected by a pierceable membrane (5) for the delivery, **characterized in that** it creates through said membrane (5), in cooperation with the bottom wall (13) of said infusion chamber (2), an hydraulic insulation between at least one discharge way (17) and at least a delivery way (14), and in order to subordinate the opening of said at least one delivery way (14) to an increase of the pressure of said liquid in said at least one delivery way (14) to direct preferentially said liquid towards said a least one discharge way (17) when in said infusion chamber a capsule is charged, of the type not having said membrane (5).

## Patentansprüche

1. Infusionsanordnung (1) einer Maschine zur Herstellung eines Getränks vom Typ, der eine Infusionskammer (2) umfasst, in der eine Wegwerfkapsel (3), aufweisend eine Bodenwand (4), die durch eine durchstechbare Membran (5) für die Ausgabe geschützt wird, aufnehmbar ist, **dadurch gekennzeichnet, dass** die Bodenwand (13) der Infusionskammer (2), auf der die Membran (5) aufliegen kann, ein hydraulisches Versiegelungsmittel an der Membran (5) aufweist, das so konfiguriert ist, dass es eine Zone der Bodenwand (13) der Infusionskammer (2) umschreibt, umfassend mindestens eine Ausgabebahn (14) des Getränks und eine Zone der Membran (5), die zum Durchstechen empfänglich ist, wobei die Infusionskammer (2) ferner ein Ablassmittel des Getränks aufweist, das in Bezug auf die Zone der Bodenwand (13) der vom Versiegelungsmittel umschriebenen Infusionskammer (2) extern positioniert ist.

2. Infusionsanordnung (1) einer Maschine zur Herstellung eines Getränks nach Anspruch 1, **dadurch gekennzeichnet, dass** die Ausgabebahn (14) ein Mittel für ihren Eigenverschluss aufweist, das zum Öffnen bei einer Druckzunahme der in der mindestens einen Ausgabebahn (14) vorhandenen Flüssigkeit empfänglich ist.

3. Infusionsanordnung (1) einer Maschine zur Herstellung eines Getränks nach dem vorangehenden Anspruch, **dadurch gekennzeichnet, dass** das Verschlussmittel ein Pilzventil (18) umfasst.

4. Infusionsanordnung (1) einer Maschine zur Herstellung eines Getränks nach einem der vorangehenden Ansprüche, **dadurch gekennzeichnet, dass** die Ausgabebahn (14) in der zentralen Zone der Bodenwand (13) der Infusionskammer (2) offen ist und dass das Ablassmittel mindestens eine Ablassbahn (17) umfasst, die entlang des Perimeters der Bodenwand (13) der Infusionskammer (2) offen ist.

5. Infusionsanordnung (1) einer Maschine zur Herstellung eines Getränks nach einem der vorangehenden Ansprüche, **dadurch gekennzeichnet, dass** das Versiegelungsmittel eine Gummidichtung (15) umfasst.

6. Infusionsanordnung (1) einer Maschine zur Herstellung eines Getränks nach einem der vorangehenden Ansprüche, **dadurch gekennzeichnet, dass** die Bodenwand (13) der Infusionskammer (2) eine Sicke (16) zum Aufliegen der Bodenwand (4) der Kapsel (3) aufweist, wobei die Auflagesicke (16) das Versiegelungsmittel umschreibt.

7. Infusionsanordnung (1) einer Maschine zur Herstellung eines Getränks nach den vorangehenden Ansprüchen, **dadurch gekennzeichnet, dass** die Sicke (16) dafür konfiguriert ist, zu einem Umfangsvorsprung (10) der Bodenwand (4) der Kapsel (3) zu passen, entlang dem die Membran (5) entlang des Umfangs fixiert ist.

8. Kaffeemaschine, **dadurch gekennzeichnet, dass** sie eine Infusionsanordnung nach einem oder mehreren der vorangehenden Ansprüche umfasst.

9. Steuerungsverfahren zur Ausgabe einer Infusionsanordnung (1) einer Maschine zur Herstellung eines Getränks vom Typ, der eine Infusionskammer (2) umfasst, in der eine Wegwerfkapsel (3), aufweisend eine Bodenwand (4), die durch eine durchstechbare Membran (5) für die Ausgabe geschützt wird, aufnehmbar ist, **dadurch gekennzeichnet, dass** es durch die Membran (5) gemeinsam mit der Bodenwand (13) der Infusionskammer (2) eine hydraulische Isolierung zwischen der mindestens einen Ablassbahn (17) und zumindest einer Ausgabebahn (14) bildet, und um die Öffnung der mindestens einen Ausgabebahn (14) einer Druckerhöhung der Flüssigkeit in der mindestens einen Ausgabebahn (14) unterzuordnen, um vorzugsweise die Flüssigkeit in Richtung der mindestens einen Ablassbahn (17) zu lenken, wenn in der Infusionskammer eine Kapsel eingefüllt ist, vom Typ, der die Membran (5) nicht aufweist.

## Revendications

1. Ensemble d'infusion (1) d'une machine permettant de produire une boisson, du type comprenant une chambre d'infusion (2) en mesure de loger en son sein une capsule jetable (3) ayant une paroi inférieure (4) protégée par une membrane pouvant être percée (5) pour l'alimentation, **caractérisé en ce que** la paroi inférieure (13) de ladite chambre d'infusion (2), sur laquelle ladite membrane (5) peut reposer, possède des moyens d'étanchéité hydrauliques contre ladite membrane (5), configurés de manière à circonscrire une zone de ladite paroi inférieure (13) de ladite chambre d'infusion (2) comprenant au moins une voie d'alimentation (14) de la boisson et une zone de ladite membrane (5) susceptible d'être perforée, ladite chambre d'infusion (2) ayant aussi des moyens d'évacuation de la boisson placés à l'extérieur par rapport à ladite zone de la paroi inférieure (13) de ladite chambre d'infusion (2) circonscrite par lesdits moyens d'étanchéité.

2. Ensemble d'infusion (1) d'une machine permettant de produire une boisson selon la revendication 1, **caractérisé en ce que** ladite voie d'alimentation (14) possède des moyens pour sa propre fermeture adaptés pour l'ouverture lors d'une augmentation de la pression dudit liquide présent dans ladite au moins une voie d'alimentation (14).

3. Ensemble d'infusion (1) d'une machine permettant de produire une boisson selon la revendication précédente, **caractérisé en ce que** lesdits moyens de fermeture comprennent une vanne à clapet (18).

4. Ensemble d'infusion (1) d'une machine permettant de produire une boisson selon l'une quelconque des revendications précédentes, **caractérisé en ce que** ladite voie d'alimentation (14) s'ouvre au niveau de la partie centrale de ladite paroi inférieure (13) de ladite chambre d'infusion (2), et **en ce que** lesdits moyens d'évacuation comprennent au moins une voie d'évacuation (17) s'ouvrant le long du périmètre de ladite paroi inférieure (13) de ladite chambre d'infusion (2).

5. Ensemble d'infusion (1) d'une machine permettant de produire une boisson selon l'une quelconque des revendications précédentes, **caractérisé en ce que** lesdits moyens d'étanchéité comprennent un joint en caoutchouc (15).

6. Ensemble d'infusion (1) d'une machine permettant de produire une boisson selon l'une quelconque des revendications précédentes, **caractérisé en ce que** ladite paroi inférieure (13) de ladite chambre d'infusion (2) possède une moulure (16) pour l'appui de ladite paroi inférieure (4) de ladite capsule (3), ladite moulure d'appui (16) circonscrivant lesdits moyens d'étanchéité.

7. Ensemble d'infusion (1) d'une machine permettant de produire une boisson selon les revendications précédentes, **caractérisé en ce que** ladite moulure (16) est configurée afin de s'adapter à une saillie périphérique (10) de la paroi inférieure (4) de ladite capsule (3) le long de laquelle ladite membrane (5) est fixée de façon périphérique.

8. Machine à café, **caractérisée en ce qu'**elle comprend un ensemble d'infusion selon l'une ou plusieurs des revendications précédentes.

9. Procédé de commande d'alimentation d'un ensemble d'infusion (1) d'une machine permettant de produire une boisson, du type comprenant une chambre d'infusion (2) en mesure de loger en son sein une capsule jetable (3) ayant une paroi inférieure (4) protégée par une membrane pouvant être percée (5) pour l'alimentation, **caractérisé en ce qu'**il crée par le biais de ladite membrane (5), conjointement avec la paroi inférieure (13) de ladite chambre d'infusion (2), une isolation hydraulique entre au moins une voie d'évacuation (17) et au moins une voie d'alimentation (14), et afin de subordonner l'ouverture de ladite au moins une voie d'alimentation (14) à une augmentation de la pression dudit liquide dans ladite au moins une voie d'alimentation (14) pour diriger de préférence ledit liquide vers ladite au moins une voie d'évacuation (17) lorsque dans ladite chambre d'infusion une capsule est chargée, du type n'ayant pas ladite membrane (5).
